# EUROPÄISCHE PATENTSCHRIFT

(11) **EP 3 000 637 B1**
(45) Veröffentlichungstag und Bekanntmachung des Hinweises auf die Patenterteilung: **15.08.2018**
(21) Anmeldenummer: 14186196.3
(22) Anmeldetag: 24.09.2014
(51) Int. Cl.: B60J 5/04

(54) **Fahrzeugtür**
Vehicle door
Porte de véhicule

(43) Veröffentlichungstag der Anmeldung: 30.03.2016
(73) Patentinhaber: Magna Steyr Fahrzeugtechnik AG & Co KG, 8041 Graz (AT)
(72) Erfinder: Hofer, Bernhard, 8053 Graz (AT); Passegger, Wolfgang, 8430 Tillmitsch (AT)
(74) Vertreter: Zangger, Bernd

(56) Entgegenhaltungen:
- EP-A2- 0 257 608
- WO-A2-01/32456
- FR-A1- 3 000 702
- US-A- 5 482 343

## Beschreibung

### Gebiet der Erfindung

Die vorliegende Erfindung betrifft eine Fahrzeugtür für ein Kraftfahrzeug, umfassend zumindest einen thermogeformten Beplankungsteil und eine Tragstruktur als Träger für das Beplankungsteil.

### Stand der Technik

Ein Aufbau von Fahrzeugtüren mittels Beplankungsteilen, insbesondere einer Innenbeplankung und einer Außenbeplankung, wobei die Beplankungsteile an einer Tragstruktur lösbar oder nicht lösbar befestigt sind, ist seit längerem bekannt.

Die DE 102 55 985 A1 offenbart eine Vorrichtung zum Verbinden der Außenbeplankung mit der Tragstruktur einer Fahrzeugtür, mit einem unlösbar mit der Außenbeplankung und lösbar mit der Tragstruktur verbundenem Trägerelement. Das Trägerelement ist über eine Schraubverbindung mit der Tragstruktur der Fahrzeugtür verbunden.

Bei solchen üblichen Befestigungsmethoden werden die Beplankungsteile über mehrere fixe Befestigungspunkte, insbesondere Verschraubungen, mit der Tragstruktur verbunden. Dies ist problematisch, da die Wärmeausdehnung der Beplankungsteile verschieden von der Wärmeausdehnung der Tragstruktur sein kann.

Als Beplankungsteile werden meist Spritzgussteile verwendet, da diese eine gute Formbarkeit der Beplankungsteile ermöglichen. Diese Technologie ist allerdings, vor allem für kleinere Stückzahlen, kostenintensiv.

Die Herstellung von Bauteilen mittels Thermoformen erlaubt im Allgemeinen eine günstigere Produktion insbesondere bei kleineren Stückzahlen, jedoch sind die Möglichkeiten bei der Formgebung stärker begrenzt, so dass beispielsweise keine Hinterschneidungen der geformten Bauteile möglich sind.

Die FR 3 000 702 A1 offenbart ein von außen sichtbares Karosserieblech mit einer thermogeformten Verkleidungsaußenhaut aus weichem Material und einem Verstärkungskern. Der Verstärkungskern kann an einer Türarmatur abnehmbar befestigt sein.

Die WO 01/32456 A2 offenbart eine Fahrzeugtür mit einer Türschale und einem Türmodul, wobei das Türmodul ein Innenverkleidungsteil und eine Kassette mit einer Befestigungsplatte zur Befestigung von Türkomponenten umfasst.

### Zusammenfassung der Erfindung

Es ist eine Aufgabe der Erfindung, Fahrzeugtüren anzugeben, die kostengünstig herstellbar sind und dabei eine unterschiedliche Wärmeausdehnung zwischen einem Beplankungsteil und einer Tragstruktur ermöglichen.

Die Lösung der Aufgabe erfolgt durch eine Fahrzeugtür für ein Kraftfahrzeug, umfassend zumindest einen thermogeformten Beplankungsteil und eine Tragstruktur als Träger für das Beplankungsteil, wobei am Beplankungsteil ein Halter befestigt ist, wobei der Halter in eine Ausformung der Tragstruktur oder in ein an der Tragstruktur befestigtes Tragelement eingreift, so dass das Beplankungsteil an der Ausformung bzw. dem Tragelement in einer Richtung normal zur Eingriffrichtung gleiten kann.

Erfindungsgemäß wird ein Beplankungsteil durch Thermoformen hergestellt. Das Ausformen von Hinterschneidungen, Umbiegungen und ähnlichen Haltestrukturen am Beplankungsbauteil ist dadurch nur sehr bedingt und je nach Form auch gar nicht möglich. Daher wird erfindungsgemäß ein Halter als zusätzliches Bauteil am Beplankungsteil befestigt. Der Halter ist so ausgebildet dass, im Eingriff mit einer Tragstruktur der Fahrzeugtür, das Beplankungsteil entlang einer Ausformung der Tragstruktur selbst oder eines an der Tragstruktur befestigten Tragelements in einer Richtung normal zur Eingriffrichtung gleiten kann. Das Eingreifen entspricht daher einem Einführen bzw. Einhängen des Halters in die Ausformung bzw. das Tragelement, wobei eine Bewegungsfreiheit des Beplankungsteils in Richtung normal auf das Einhängen besteht. Durch das mögliche Gleiten der beiden Bauteile zueinander können unterschiedliche Wärmeausdehnungen der Bauteile aufgenommen werden. Die Ausformung bzw. das Tragelement dient der Führung und groben Positionierung des Halters bzw. des Beplankungsteils.

Erfindungsgemäß kann der Eingriff in eine Ausformung der Tragstruktur selbst oder ein an der Tragstruktur befestigtes Tragelement auch umfassen, das mehrere befestigte Tragelemente der Tragstruktur oder verschiedene Ausformungen, sowie auch befestigte Tragelemente zusammen mit Ausformungen der Tragstruktur selbst, insbesondere durch dadurch ausgebildete Zwischenräume, als Gegenelement für den Eingriff des Halters verwendet werden können.

Erfindungsgemäß ist der Halter in die Ausformung der Tragstruktur oder in das an der Tragstruktur befestigte Tragelement von oben eingehängt, so dass das Beplankungsteil an der Ausformung bzw. dem Tragelement in Längsrichtung der Fahrzeugtür gleiten kann.

Der Halter wird erfindungsgemäß durch eine sich in Längsrichtung des Fahrzeugs erstreckende Halteleiste gebildet. Die Ausformung bzw. das Tragelement erstreckt sich bevorzugt in Längsrichtung des Fahrzeugs.

Der Halter befindet sich vorzugsweise in einem oberen Bereich des Beplankungsteils, insbesondere Nahe der Oberkante des Beplankungsteils.

Bevorzugt weist der Halter im Wesentlichen ein umgekehrtes U-Profil auf.

Der Halter ist erfindungsgemäß am Beplankungsteil mittels Kleben oder Schweißen, insbesondere Ultraschallschweißen, befestigt.

Zusätzlich zur Befestigung mittels Halter, kann das Beplankungsteil im unteren Bereich des Beplankungsteils an der Tragstruktur fixiert sein, insbesondere geklebt sein und/oder mittels Clip-Verbindung oder Dual-Lock Verbindung an der Tragstruktur befestigt sein. Eine derartige zusätzliche Befestigung kann insbesondere für eine Innenbeplankung vorgesehen sein. Der Kleber kann dabei ein elastischer Montagekleber sein, der ebenfalls in begrenztem Maß Wärmeausdehnungsunterschiede aufnehmen kann. Besonders vorteilhaft ist eine lösbare Verbindung mittels Dual-Lock Verbindungen, bekannt von der Firma 3M, da hierbei eine weniger exakte Ausrichtung der beiden Bauteile zueinander erforderlich ist, als beispielsweise bei einfachen Clip-Verbindungen.

Bevorzugt kann das Beplankungsteil zumindest im Bereich einer ersten Seite des Halters, bevorzugt in Fahrzeug-Längsrichtung hinten, eine in Fahrzeuglängsrichtung verlaufende Führungslasche aufweist, die in einer Laschenaufnahme der Tragstruktur geführt ist. Eine derartige Führungslasche kann in Fahrzeuglängsrichtung in der Laschenaufnahme gleiten und somit ebenfalls unterschiedliches Ausdehnungsverhalten der Bauteile aufnehmen. Eine derartige Führungslasche kann insbesondere an einer Außenbeplankung vorgesehen sein.

Eine Außenbeplankung kann im Bereich einer zweiten Seite des Halters, bevorzugt in Fahrzeug-Längsrichtung vorne, mit der Tragstruktur bzw. einem weiteren Verbindungsteil zur Tragstruktur verschraubt sein und dient damit der Positionierung und der Diebstahlsicherung.

Auch eine Innenbeplankung kann zusätzlich mit der Tragstruktur verschraubt sein, wobei bevorzugt eine einzige Schraube verwendet wird, da die eigentliche Befestigung im Wesentlichen über den erfindungsgemäßen Halter erreicht wird und die Schraube lediglich der Diebstahlsicherung und Zentrierung bei der Montage dienen kann.

Vorzugsweise umfasst die Fahrzeugtür eine Innenbeplankung und eine Außenbeplankung, die beide als Beplankungsteile wie beschrieben ausgeführt sind und insbesondere beide zumindest einen Halter zur Befestigung an der Tragstruktur aufweisen.

Die Außenbeplankung ist bevorzugt im unteren Bereich an der Innenbeplankung befestigt, insbesondere verklebt und/oder mittels Clip-Verbindung oder Dual-Lock Verbindung verbunden. Eine Befestigung im unteren Bereich der Außenbeplankung an der Tragstruktur erfolgt dabei bevorzugt nicht, da die Wärmeausdehnung der Außenbeplankung deutlich verschieden von der Tragstruktur sein kann.

Auch ist die Außenbeplankung in beiden Seitenbereichen bevorzugt an der Innenbeplankung befestigt, insbesondere verklebt und/oder mittels Clip-Verbindung oder Dual-Lock Verbindung verbunden. Eine Befestigung in den Seitenbereichen der Außenbeplankung an der Tragstruktur erfolgt dabei bevorzugt ebenfalls nicht.

Besonders bevorzugt wird die Außenbeplankung, abgesehen von der Steckverbindung durch den Halter, nicht an der Tragstruktur befestigt, insbesondere nicht geklebt oder verschraubt, sondern lediglich am Innenbeplankungsteil verklebt oder mittels Dual-Lock Verbindungen befestigt.

Zwischen der Außenbeplankung und der Innenbeplankung und/oder zwischen der Außenbeplankung und der Tragstruktur und/oder zwischen der Innenbeplankung und der Tragstruktur kann zumindest ein, bevorzugt mehrere Abstandszwischenstücke angeordnet sein, damit bei einer Belastung von außen die Beplankung nicht eingedrückt wird.

### Kurzbeschreibung der Zeichnungen

Die Erfindung wird im Folgenden beispielhaft unter Bezugnahme auf die Zeichnungen beschrieben.
- Fig. 1: ist eine Schnittansicht einer Innenbeplankung einer erfindungsgemäßen Fahrzeugtür.
- Fig. 2: ist eine dreidimensionale Darstellung einer Innenbeplankung einer erfindungsgemäßen Fahrzeugtür.
- Fig. 3: ist eine Schnittansicht einer Außenbeplankung einer erfindungsgemäßen Fahrzeugtür.
- Fig. 4: ist eine dreidimensionale Darstellung einer Außenbeplankung einer erfindungsgemäßen Fahrzeugtür.
- Fig. 5: ist eine Schnittansicht einer erfindungsgemäßen Fahrzeugtür.
- Fig. 6: ist eine Detaildarstellung des oberen Bereichs der Fahrzeugtür gemäß Fig. 5.
- Fig. 7: ist eine Detaildarstellung des unteren Bereichs der Fahrzeugtür gemäß Fig. 5.
- Fig. 8: ist eine Darstellung einer montierten Außenbeplankung einer erfindungsgemäßen Fahrzeugtür mit Detailbereichen A und B.
- Fig. 9: ist eine Detaildarstellung des Detailbereichs A der Fahrzeugtür gemäß Fig. 8.
- Fig. 10: ist eine Detaildarstellung des Detailbereichs B der Fahrzeugtür gemäß Fig. 8.

### Detaillierte Beschreibung der Erfindung

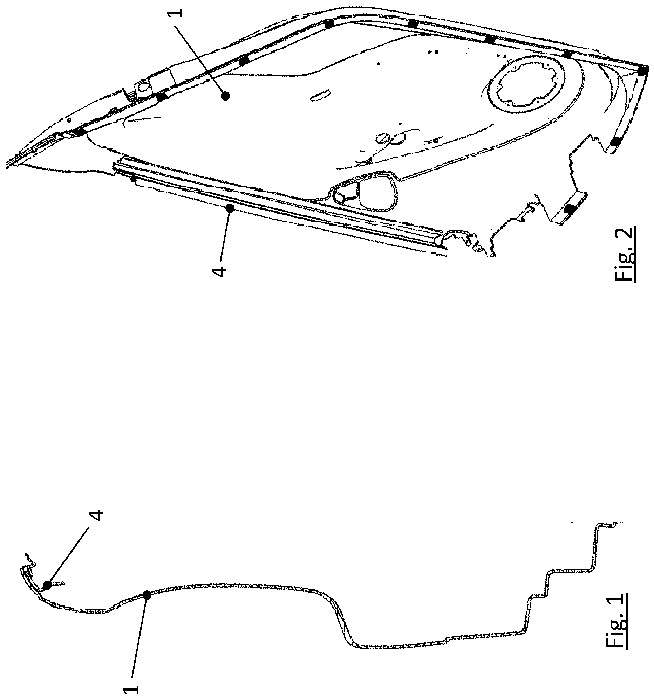

Fig. 1 ist eine Schnittansicht und in Fig. 2 eine dreidimensionale Ansicht einer Innenbeplankung 1 einer erfindungsgemäßen Fahrzeugtür dargestellt. Die Innenbeplankung 1 weist in einem in Einbaulage der Fahrzeugtür oberen Bereich der Innenbeplankung 1 einen Halter 4 auf.

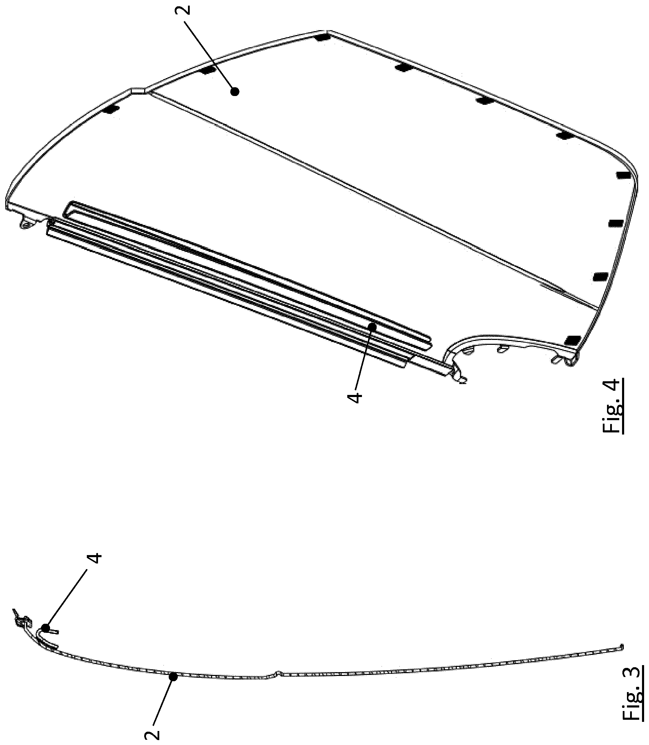

In analoger Weise zeigen Fig. 3 und Fig. 4 eine Schnittansicht und eine dreidimensionale Ansicht einer Außenbeplankung 2 einer erfindungsgemäßen Fahrzeugtür. Die Außenbeplankung 2 weist ebenfalls in einem in Einbaulage der Fahrzeugtür oberen Bereich der Außenbeplankung 2 einen Halter 4 auf. Der Halter 4 weist im Wesentlichen ein umgekehrtes U-Profil auf.

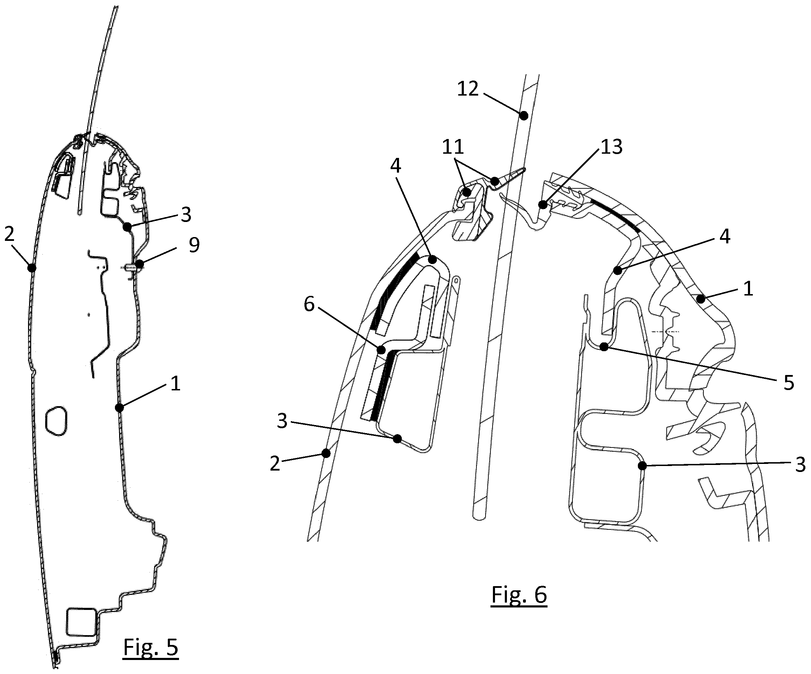

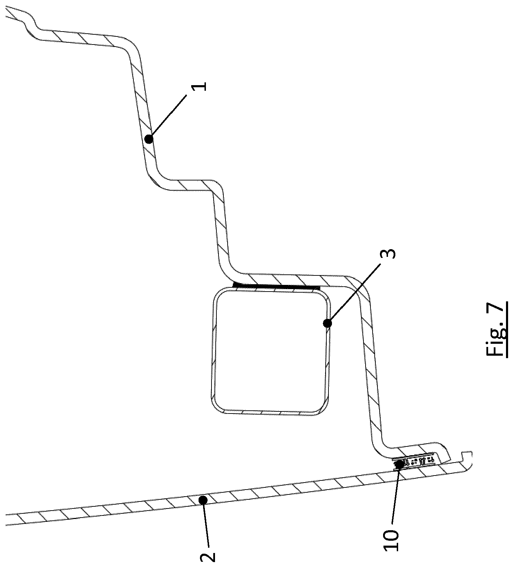

Fig. 5 zeigt eine Schnittansicht einer kompletten erfindungsgemäßen Fahrzeugtür mit Innenbeplankung 1 und Außenbeplankung 2. Der obere Bereich der Fahrzeugtür ist in Fig. 6 näher dargestellt, der untere Bereich in Fig. 7. In einem mittleren Bereich der Fahrzeugtür ist die Innenbeplankung 1 durch eine Schraube 9 mit der Tragstruktur 3 der Fahrzeugtür verbunden. Die Schraube 9 dient in erster Linie der Zentrierung der Innenbeplankung 1 an der Tragstruktur 4.

Fig. 6 zeigt die Befestigung der Innenbeplankung 1 und der Außenbeplankung 2 jeweils mittels der an den Beplankungsteilen 1, 2 befestigten Halter 4 an der Tragstruktur 3 der Fahrzeugtür.

An der Außenbeplankung 2 ist ein U-förmiger Halter 4 durch Kleben befestigt. Der Klebstoff ist als dicke schwarze Linie dargestellt. Der Halter 4 greift in ein Tragelement 6 bzw. in einen Zwischenraum zwischen dem Tragelement 6 und der Tragstruktur 3 ein bzw. ist in dieser Weise in den Zwischenraum von oben eingehängt. Das obere Ende der Außenbeplankung 2 mündet in eine Nut einer Scheibendichtung 11 zur Abdichtung gegenüber einer Fensterscheibe 12.

Die Innenbeplankung 1 weist ebenfalls einen angeklebten Halter 4 auf, der hier in eine Ausformung 5 der Tragstruktur 3 eingreift. Zwischen dem oberen Ende des Halters 4 und dem oberen Ende der Innenbeplankung 1 ist eine Dichtung 13 angeordnet, um den Klebespalt zwischen Innenbeplankung 1 und Halter 4 abzudichten. Der Halter 4 ist in diesem Fall auch zur Aufnahme einer Dichtung ausgebildet.

Fig. 7 zeigt den unteren Bereich der Fahrzeugtür gemäß Fig. 5. Hier ist die Innenbeplankung 1 mittels Klebeverbindung (schwarze Linie) an der Tragstruktur 3 befestigt. Am unteren Ende sind Innenbeplankung 1 und Außenbeplankung 2 mittels Dual-Lock Verbindungen 10 miteinander verbunden. Hierdurch zeigt sich ein besonderer Vorteil der Erfindung, da nur das Innenbeplankungsteil 1 im unteren Bereich an der Tragstruktur 3 befestigt (Kleber, Dual-Lock) ist und das Außenbeplankungsteil 2 in diesem Bereich nur mit dem Innenbeplankungsteil 1 verbunden ist (Kleber oder vorzugsweise Dual-Lock), können besonders zwischen dem Außenbeplankungsteil 2 und der meist aus Metall bestehenden Tragstruktur 3 keine Verspannungen auf Grund unterschiedlicher Wärmeausdehnung entstehen. Gleiches gilt, wenn das Außenbeplankungsteil 2 an den Seitenbereichen nur mit dem Innenbeplankungsteil 1 verbunden wird und nicht mit der Tragstruktur 3.

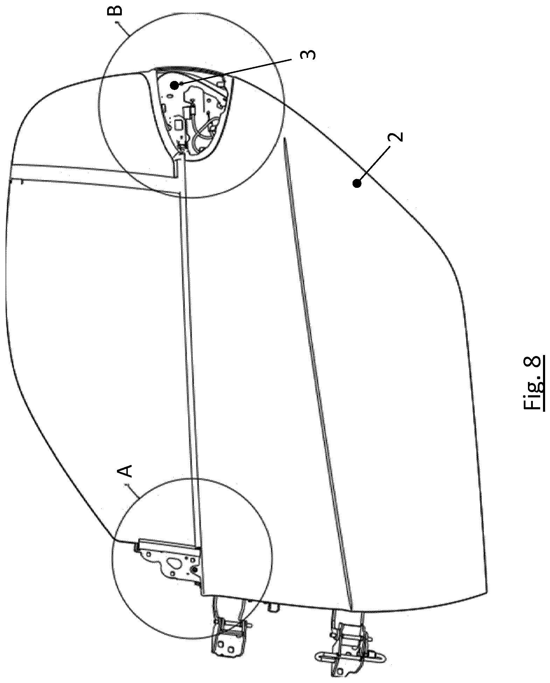

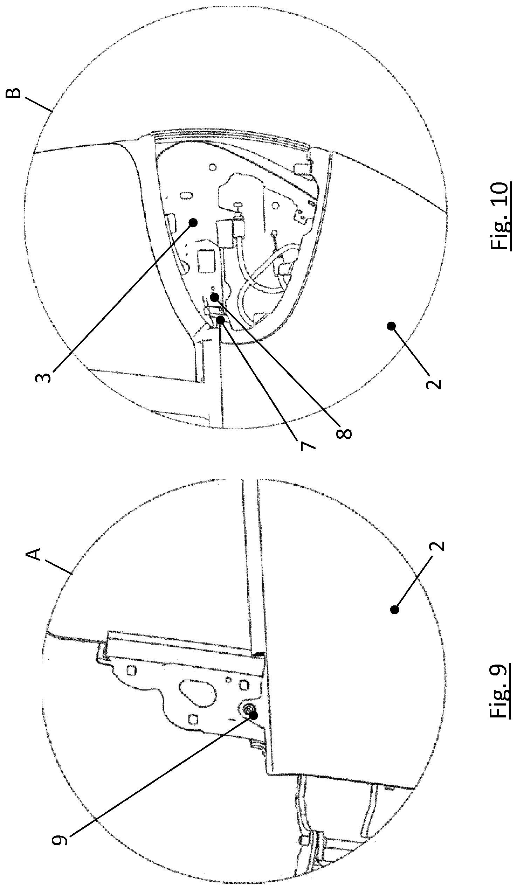

Fig. 8 zeigt eine montierte Außenbeplankung 2 einer erfindungsgemäßen Fahrzeugtür. Am in Fahrzeugrichtung vorderen Ende der Fahrzeugtür ist in einem Detailbereich A - näher dargestellt in Fig. 9 - die Außenbeplankung 2 mittels Schraube 9 mit der Tragstruktur 3 verschraubt. Im in Fahrzeugrichtung hinteren Bereich B weist die Außenbeplankung 2 eine nach hinten abstehende Führungslasche 7 auf, die in eine nach vorne offene Laschenaufnahme 8 einbracht ist. Hierdurch kann die Außenbeplankung 2 in Fahrzeuglängsrichtung eine Wärmeausdehnung ausführen und dabei der Halter 4 nicht nach oben abheben.

### Bezugszeichenliste

- 1: Innenbeplankung
- 2: Außenbeplankung
- 3: Tragstruktur
- 4: Halter
- 5: Ausformung
- 6: Tragelement
- 7: Führungslasche
- 8: Laschenaufnahme
- 9: Schraube
- 10: Dual-Lock Verbindung
- 11: Scheibendichtung
- 12: Fensterscheibe
- 13: Dichtung

## Patentansprüche

1. Fahrzeugtür für ein Kraftfahrzeug, umfassend zumindest einen thermogeformten Beplankungsteil (1, 2) und eine Tragstruktur (3) als Träger für das Beplankungsteil,
wobei am Beplankungsteil (1, 2) ein Halter (4) befestigt ist, wobei der Halter (4) am Beplankungsteil (1,2) mittels Kleben oder Schweißen befestigt ist, wobei der Halter (4) in eine Ausformung (5) der Tragstruktur (3) oder in ein an der Tragstruktur (3) befestigtes Tragelement (6) eingreift, so dass das Beplankungsteil (1, 2) an der Ausformung (5) bzw. dem Tragelement (6) in einer Richtung normal zur Eingriffrichtung gleiten kann, **dadurch gekennzeichnet, dass** der Halter (4) durch eine sich in Längsrichtung des Fahrzeugs erstreckende Halteleiste gebildet wird, wobei der Halter (4) in die Ausformung (5) der Tragstruktur (3) oder in das an der Tragstruktur (3) befestigte Tragelement (6) von oben eingehängt ist, so dass das Beplankungsteil (1, 2) an der Ausformung (5) bzw. dem Tragelement (6) in Längsrichtung der Fahrzeugtür gleiten kann.

2. Fahrzeugtür nach Anspruch 1,
**dadurch gekennzeichnet, dass** die Ausformung (5) bzw. das Tragelement (6) sich in Längsrichtung des Fahrzeugs erstrecken.

3. Fahrzeugtür nach zumindest einem der vorhergehenden Ansprüche, **dadurch gekennzeichnet, dass** sich der Halter (4) in einem oberen Bereich des Beplankungsteils (1, 2) befindet.

4. Fahrzeugtür nach zumindest einem der vorhergehenden Ansprüche, **dadurch gekennzeichnet, dass** der Halter (4) im Wesentlichen ein umgekehrtes U-Profil aufweist.

5. Fahrzeugtür nach zumindest einem der vorhergehenden Ansprüche, **dadurch gekennzeichnet, dass** der Halter (4) am Beplankungsteil (1, 2) mittels Ultraschallschweißen befestigt ist.

6. Fahrzeugtür nach zumindest einem der vorhergehenden Ansprüche, **dadurch gekennzeichnet, dass** das Beplankungsteil (1, 2) im unteren Bereich an der Tragstruktur (3) fixiert ist, insbesondere geklebt ist und/oder mittels Clip-Verbindung oder Dual-Lock Verbindung an der Tragstruktur (3) befestigt ist, wobei das Beplankungsteil (1, 2) insbesondere eine Innenbeplankung (1) ist.

7. Fahrzeugtür nach zumindest einem der vorhergehenden Ansprüche, **dadurch gekennzeichnet, dass** das Beplankungsteil (1, 2) zumindest im Bereich einer ersten Seite des Halters (4), bevorzugt in Fahrzeug-Längsrichtung hinten, eine in Fahrzeuglängsrichtung verlaufende Führungslasche (7) aufweist, die in einer Laschenaufnahme (8) der Tragstruktur (3) geführt ist, wobei das Beplankungsteil (1, 2) insbesondere eine Außenbeplankung (2) ist.

8. Fahrzeugtür nach zumindest einem der vorhergehenden Ansprüche, **dadurch gekennzeichnet, dass** das Beplankungsteil (1, 2) mit der Tragstruktur (3) verschraubt ist, insbesondere mittels einer einzigen Schraube (9), wobei das Beplankungsteil (1, 2) insbesondere eine Außenbeplankung (2) ist und im Bereich einer zweiten Seite des Halters (4), bevorzugt in Fahrzeug-Längsrichtung vorne, verschraubt ist.

9. Fahrzeugtür nach zumindest einem der vorhergehenden Ansprüche, **dadurch gekennzeichnet, dass** die Fahrzeugtür eine Innenbeplankung (1) und eine Außenbeplankung(2) umfasst, wobei sowohl die Innenbeplankung (1) als auch die Außenbeplankung (2) durch ein Beplankungsteil (1, 2) entsprechend einem der vorhergehenden Ansprüche gebildet ist.

10. Fahrzeugtür nach Anspruch 9,
**dadurch gekennzeichnet, dass** die Außenbeplankung (2) oder die Innenbeplankung (1) im unteren Bereich am jeweils anderen Beplankungsteil (1, 2) befestigt ist, insbesondere verklebt ist und/oder mittels Clip-Verbindung oder Dual-Lock Verbindung (10) verbunden ist, wobei die Außenbeplankung (2) oder die Innenbeplankung (1) im unteren Bereich bevorzugt nicht an der Tragstruktur (3) befestigt ist.

11. Fahrzeugtür nach Anspruch 9 oder 10,
**dadurch gekennzeichnet, dass** die Außenbeplankung (2) oder die Innenbeplankung (1) in beiden Seitenbereichen am jeweils anderen Beplankungsteil (1, 2) befestigt ist, insbesondere verklebt ist und/oder mittels Clip-Verbindung oder Dual-Lock Verbindung (10) verbunden ist, wobei die Außenbeplankung (2) oder die Innenbeplankung (1) in zumindest einem Seitenbereich bevorzugt nicht an der Tragstruktur (3) befestigt ist.

12. Fahrzeugtür nach einem der Ansprüche 9 bis 11,
**dadurch gekennzeichnet, dass** zwischen der Außenbeplankung (2) und der Innenbeplankung (1) und/oder zwischen der Außenbeplankung (2) und der Tragstruktur (3) und/oder zwischen der Innenbeplankung (1) und der Tragstruktur (3) zumindest ein Abstandszwischenstück angeordnet ist.

## Claims

1. Vehicle door for a motor vehicle comprising at least one thermoformed panel part (1, 2) and a supporting structure (3) as a support for the panel part,
wherein a holder (4) is fastened to the panel part (1, 2), wherein the holder (4) is fastened to the panel part (1, 2) by means of adhesive bonding or welding, wherein the holder (4) engages in a shaped portion (5) of the supporting structure (3) or in a support element (6) fastened to the supporting structure (3), so that the panel part (1, 2) may slide on the shaped portion (5) and/or the support element (6) in a direction perpendicular to the direction of engagement, **characterized in that** the holder (4) is formed by a retaining strip extending in the vehicle longitudinal direction, wherein the holder (4) is suspended from above in the shaped portion (5) of the supporting structure (3) or in the support element (6) fastened to the supporting structure (3), so that the panel part (1, 2) may slide on the shaped portion (5) and/or the support element (6) in the longitudinal direction of the vehicle door.

2. Vehicle door according to Claim 1,
**characterized in that** the shaped portion (5) and/or the support element (6) extend in the vehicle longitudinal direction.

3. Vehicle door according to at least one of the preceding claims,
**characterized in that** the holder (4) is located in an upper region of the panel part (1, 2).

4. Vehicle door according to at least one of the preceding claims,
**characterized in that** the holder (4) substantially has a reversed U-shaped profile.

5. Vehicle door according to at least one of the preceding claims,
**characterized in that** the holder (4) is fastened to the panel part (1, 2) by means of ultrasonic welding.

6. Vehicle door according to at least one of the preceding claims,
**characterized in that** the panel part (1, 2) is fixed in the lower region to the supporting structure (3), in particular adhesively bonded and/or fastened by means of a clip connection or dual-lock connection to the supporting structure (3), wherein the panel part (1, 2), in particular, is an inner panel (1).

7. Vehicle door according to at least one of the preceding claims,
**characterized in that** the panel part (1, 2), at least in the region of a first side of the holder (4) and preferably to the rear in the vehicle longitudinal direction, has a guide tab (7) extending in the vehicle longitudinal direction which is guided in a tab receiver (8) of the supporting structure (3), wherein the panel part (1, 2) is, in particular, an outer panel (2).

8. Vehicle door according to at least one of the preceding claims,
**characterized in that** the panel part (1, 2) is screwed to the supporting structure (3), in particular by means of a single screw (9), wherein the panel part (1, 2), in particular, is an outer panel (2) and is screwed in the region of a second side of the holder (4), preferably to the front in the vehicle longitudinal direction.

9. Vehicle door according to at least one of the preceding claims,
**characterized in that** the vehicle door comprises an inner panel (1) and an outer panel (2), wherein both the inner panel (1) and the outer panel (2) are formed by a panel part (1, 2) corresponding to one of the preceding claims.

10. Vehicle door according to Claim 9,
**characterized in that** the outer panel (2) or the inner panel (1) are fastened in the lower region respectively to the other panel part (1, 2), in particular adhesively bonded and/or connected by means of a clip connection or dual-lock connection (10), wherein the outer panel (2) or the inner panel (1) in the lower region is preferably not fastened to the supporting structure (3).

11. Vehicle door according to Claim 9 or 10,
**characterized in that** the outer panel (2) or the inner panel (1) in both side regions are fastened respectively to the other panel part (1, 2), in particular adhesively bonded and/or connected by means of a clip connection or dual-lock connection (10), wherein the outer panel (2) or the inner panel (1) in at least one side region are preferably not fastened to the supporting structure (3).

12. Vehicle door according to one of Claims 9 to 11, **characterized in that** at least one spacer is arranged between the outer panel (2) and the inner panel (1) and/or between the outer panel (2) and the supporting structure (3) and/or between the inner panel (1) and the supporting structure (3).

## Revendications

1. Porte de véhicule pour un véhicule automobile, comprenant au moins une partie de panneau (1, 2) formée à chaud et une structure de support (3) comme support pour la partie de panneau,
dans laquelle un soutien (4) est fixé à la partie de panneau (1, 2),
dans laquelle le soutien (4) est fixé à la partie de panneau (1, 2) par collage ou soudage,
dans laquelle le soutien (4) s'engage dans un creux (5) de la structure de support (3) ou dans un élément de support (6) fixé à la structure de support (3), de telle manière que la partie de panneau (1, 2) puisse glisser sur le creux (5) ou sur l'élément de support (6) dans une direction normale à la direction d'engagement, **caractérisée en ce que** le soutien (4) est formé par une latte de soutien s'étendant dans la direction longitudinale du véhicule, dans laquelle le soutien (4) est suspendu par le haut dans le creux (5) de la structure de support (3) ou dans l'élément de support (6) fixé à la structure de support (3), de telle manière que la partie de panneau (1, 2) puisse glisser sur le creux (5) ou sur l'élément de support (6) dans la direction longitudinale de la porte de véhicule.

2. Porte de véhicule selon la revendication 1, **caractérisée en ce que** le creux (5) ou l'élément de support (6) s'étend dans la direction longitudinale du véhicule.

3. Porte de véhicule selon au moins une des revendications précédentes, **caractérisée en ce que** le soutien (4) se trouve dans une région haute de la partie de panneau (1, 2).

4. Porte de véhicule selon au moins une des revendications précédentes, **caractérisée en ce que** le soutien (4) présente essentiellement un profil en forme de U inversé.

5. Porte de véhicule selon au moins une des revendications précédentes, **caractérisée en ce que** le soutien (4) est fixé à la partie de panneau (1, 2) par soudage aux ultrasons.

6. Porte de véhicule selon au moins une des revendications précédentes, **caractérisée en ce que** la partie de panneau (1, 2) est fixée dans la partie inférieure à la structure de support (3), en particulier est collée et/ou est fixée par encliquetage ou par assemblage Dual Lock, dans laquelle la partie de panneau (1, 2) est en particulier un panneau intérieur (1).

7. Porte de véhicule selon au moins une des revendications précédentes, **caractérisée en ce que** la partie de panneau (1, 2) présente, au moins dans la région d'un premier côté du soutien (4), de préférence derrière dans la direction longitudinale du véhicule, une patte de guidage (7) s'étendant dans la direction longitudinale du véhicule, qui est guidée dans un logement de patte (8) de la structure de support (3), dans laquelle la partie de panneau (1, 2) est en particulier un panneau extérieur (2) .

8. Porte de véhicule selon au moins une des revendications précédentes, **caractérisée en ce que** la partie de panneau (1, 2) est vissée à la structure de support (3), en particulier au moyen d'une seule vis (9), dans laquelle la partie de panneau (1, 2) est en particulier un panneau extérieur (2) et est vissée dans la région d'un deuxième côté du soutien (4), de préférence devant dans la direction longitudinale du véhicule.

9. Porte de véhicule selon au moins une des revendications précédentes, **caractérisée en ce que** la porte de véhicule comprend un panneau intérieur (1) et un panneau extérieur (2), dans laquelle aussi bien le panneau intérieur (1) que le panneau extérieur (2) sont formés par une partie de panneau (1, 2) selon l'une quelconque des revendications précédentes.

10. Porte de véhicule selon la revendication 9, **caractérisée en ce que** le panneau extérieur (2) ou le panneau intérieur (1) est fixé respectivement dans la région inférieure à l'autre partie de panneau (1, 2), en particulier collé et/ou assemblé par encliquetage ou par assemblage Dual Lock (10), dans laquelle le panneau extérieur (2) ou le panneau intérieur (1) n'est de préférence pas fixé dans la région inférieure à la structure de support (3).

11. Porte de véhicule selon la revendication 9 ou 10, **caractérisée en ce que** le panneau extérieur (2) ou le panneau intérieur (1) est fixé dans les deux régions latérales chaque fois à l'autre partie de panneau (1, 2), en particulier collé et/ou assemblé par encliquetage ou par assemblage Dual Lock (10), dans laquelle le panneau extérieur (2) ou le panneau intérieur (1) n'est de préférence pas fixé à la structure de support (3) dans au moins une région latérale.

12. Porte de véhicule selon au moins une des revendications 9 à 11, **caractérisée en ce qu'**au moins une pièce intermédiaire d'écartement est disposée entre le panneau extérieur (2) et le panneau intérieur (1) et/ou entre le panneau extérieur (2) et la structure de support (3) et/ou entre le panneau intérieur (1) et la structure de support (3).
